(19) Europäisches Patentamt
European Patent Office
Office européen des brevets

(11) **EP 4 524 884 A1**

(12) **EUROPEAN PATENT APPLICATION**
published in accordance with Art. 153(4) EPC

(43) Date of publication:
**19.03.2025 Bulletin 2025/12**

(21) Application number: **23915183.0**

(22) Date of filing: **27.07.2023**

(51) International Patent Classification (IPC):
**G06T 7/00** (2017.01)       **G06F 18/22** (2023.01)
**G06V 10/75** (2022.01)       **G06V 10/74** (2022.01)

(52) Cooperative Patent Classification (CPC):
**G06F 18/22; G06V 10/75; G06V 10/761**

(86) International application number:
**PCT/JP2023/027608**

(87) International publication number:
**WO 2025/022664 (30.01.2025 Gazette 2025/05)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Rakuten Group, Inc.**
**Setagaya-ku**
**Tokyo 158-0094 (JP)**

(72) Inventors:
• **NAHATA, Dhananjay**
  **Tokyo 1580094 (JP)**
• **ROXAS, Menandro**
  **Tokyo 1580094 (JP)**

(74) Representative: **EIP**
**Fairfax House**
**15 Fulwood Place**
**London WC1V 6HU (GB)**

(54) **IMAGE PROCESSING DEVICE, IMAGE PROCESSING METHOD, AND IMAGE PROCESSING PROGRAM**

(57)     It is aimed at improving accuracy of image processing for determining whether or not a target image includes an image related to a predetermined object. An image processing apparatus 1 includes a sample distribution index calculation unit 25 that calculates a sample distribution index indicating a dispersion of a plurality of sample features in a sample image S1 related to the predetermined object, the plurality of sample features being extracted from the sample image S1, a match distribution index calculation unit 26 that calculates a match distribution index indicating a dispersion of a plurality of matching features in the sample image S1, the plurality of matching features, among the plurality of sample features, matching a plurality of query features extracted from a query image Q1 or Q2 for which determination is made as to whether or not the sample image S1 is included therein, and an exclusion determination unit 27 that determines that, when a difference between the sample distribution index and the match distribution index exceeds a predetermined standard, the query image Q 1 or Q2 does not include the sample image S1.

*FIG.2*

```
IMAGE PROCESSING APPARATUS                    1

   QUERY IMAGE ACQUISITION UNIT              21

   FEATURE EXTRACTION UNIT                   22

   MATCHING FEATURE SPECIFICATION UNIT       23

   OBJECT DETERMINATION UNIT                 24

   SAMPLE DISTRIBUTION INDEX CALCULATION UNIT 25

   MATCH DISTRIBUTION INDEX CALCULATION UNIT 26

   EXCLUSION DETERMINATION UNIT              27

   NOTIFICATION UNIT                         28
```

EP 4 524 884 A1

# Description

[Technical Field]

The present disclosure relates to an image processing technology.

[Background Art]

Conventionally, a similar region detection apparatus has been proposed which includes an acquisition unit that acquires a first image and a second image, a feature point extraction unit that extracts respective feature points of the first image and the second image, a matching unit that associates the feature points extracted from the first image with the feature points extracted from the second image to detect corresponding points between the images, an outermost contour extraction unit that extracts respective outermost contours from the first image and the second images, and a detection unit that detects, from the first image and the second image, respective similar regions, which are respective local regions similar to each other, of the first image and the second image on the basis of the outermost contours and the number of the corresponding points (see PTL 1).

In addition, various technologies have been proposed which compare features extracted from images to each other to thereby perform image matching (see NPL 1 and NPL 2).

[Citation List]

[Patent Literature]

[PTL 1] Japanese Patent Application Publication No. 2021-051581

[Non Patent Literature]

> [NPL 1] "Open CV Feature Matching", [online], Open CV, [Searched on February 27, 2023], Internet <URL: https://docs.opencv.org/4.x/dc/dc3/tutorial_py_matcher.html>
> [NPL 2] Paul-Edouard Sarlin, and three others, "Super Glue: Learning Feature Matching with Graph Neural Networks", CVPR 2020

[Summary of Invention]

[Technical Problem]

Conventionally, various technologies for recognizing a predetermined target (such as an image-captured object or character) included in an image have been proposed, but there is room for improvement in accuracy of the recognition of the target in the image. In view of the problem described above, the present disclosure is aimed at improving accuracy of recognition of a predetermined target included in an image.

[Solution to Problem]

An example of the present disclosure is an image processing apparatus including: a sample distribution index calculation means that calculates a sample distribution index indicating a dispersion of a plurality of sample features in a sample image related to a predetermined object, the plurality of sample features being extracted from the sample image; a match distribution index calculation means that calculates a match distribution index indicating a dispersion of a plurality of matching features in the sample image, the plurality of matching features, among the plurality of sample features, matching a plurality of query features extracted from a query image for which determination is made as to whether or not an image related to the predetermined object is included therein; and an exclusion determination means that determines that, when a difference between the sample distribution index and the match distribution index exceeds a predetermined standard, the query image does not include the image related to the predetermined object.

The present disclosure can be recognized as a method to be implemented by the image processing apparatus, a system, and a computer or as a program to be executed by the computer. The present disclosure can also be recognized as such a program recorded in a recording medium which is readable by the computer, another apparatus, a machine, or the like. The recording medium readable by the computer or the like mentioned herein refers to a recording medium which stores therein information such as data or a program by electric, magnetic, optical, mechanical, or chemical action and allows the information to be read by the computer or the like.

[Advantageous Effects of Invention]

According to the present disclosure, it is possible to improve accuracy of recognition of a predetermined target included in an image.

[Brief Description of Drawings]

> [Fig. 1] Fig. 1 is a schematic view illustrating a configuration of a system according to an embodiment.
> [Fig. 2] Fig. 2 is a diagram illustrating an overview of a functional configuration of an image processing apparatus according to the embodiment.
> [Fig. 3] Fig. 3 is a diagram illustrating an example of query images in the embodiment.
> [Fig. 4] Fig. 4 is a diagram illustrating an example of a sample image according to an object in the embodiment and features extracted from the sample image.

[Fig. 5] Fig. 5 is a diagram illustrating an outline of calculation of a density of the sample features in the embodiment.

[Fig. 6] Fig. 6 is a diagram illustrating an outline of calculation of a density of matching features in the embodiment.

[Fig. 7] Fig. 7 is a diagram illustrating an outline of comparison between respective standard deviations of feature densities of the sample image and the query images in the embodiment.

[Fig. 8] Fig. 8 is a diagram illustrating, for the sample image and the query images, relationships between results of determination by an object determination unit, standard deviations of feature densities, and differences between the standard deviations.

[Fig. 9A] Fig. 9A is a flow chart illustrating a flow of inspection processing according to the embodiment.

[Fig. 9B] Fig. 9B is a flow chart illustrating a flow of inspection processing according to the embodiment.

[Fig. 10] Fig. 10 is a diagram illustrating an overview of a functional configuration of an image processing apparatus according to a variation.

[Fig. 11] Fig. 11 is a flow chart illustrating a flow of inspection processing according to the variation.

[Description of Embodiments]

The following will describe a mode of implementation of an image processing apparatus, an image processing method, and an image processing program according to the present disclosure on the basis of the drawings. However, the mode of implementation described below is illustrative of an embodiment, and is not intended to limit the image processing apparatus, the image processing method, and the image processing program according to the present disclosure to specific configurations described below. In implementation, the specific configurations according to the mode of implementation are adopted as appropriate, and various improvements and modifications can be made therein.

Conventionally, feature matching has been performed for comparison between images and, various image processing technologies for determining whether or not a target image includes an image related to a predetermined object have been proposed. However, the conventionally proposed technologies exert given effects in detecting similar regions, which are respective local regions of the individual images similar to each other, from the individual images, but there is room for improvement in performing matching that gives greater consideration to positional relationships and a distribution status among features in a group of a huge number of features.

In view of the problem described above, the present disclosure is aimed at improving accuracy of image processing for determining whether or not a target image includes an image related to a predetermined object.

With the image processing apparatus, the image processing method, and the image processing program according to the present embodiment, it is possible to perform matching that gives greater consideration to relationships and a distribution status among features in a feature group and improve the accuracy of the image processing for determining whether or not the target image includes the image related to the predetermined object.

In the present embodiment, a description will be given of a mode of implementation when a technology according to the present disclosure is implemented to confirm whether or not an advertisement serving as the predetermined object is placed correctly according to instructions for posting advertisements. However, the technology according to the present disclosure can be used widely to determine whether or not the target image includes an image related to the predetermined object, and an application target of the present disclosure is not limited to an example shown in the embodiment. For example, the object may also be an object rendered in a virtual space or an object rendered using rendering software, not a tangible entity. Meanwhile, for example, an image may also be an image obtained by rendering a virtual space or an image rendered using rendering software, not an optically captured image.

<System Configuration>

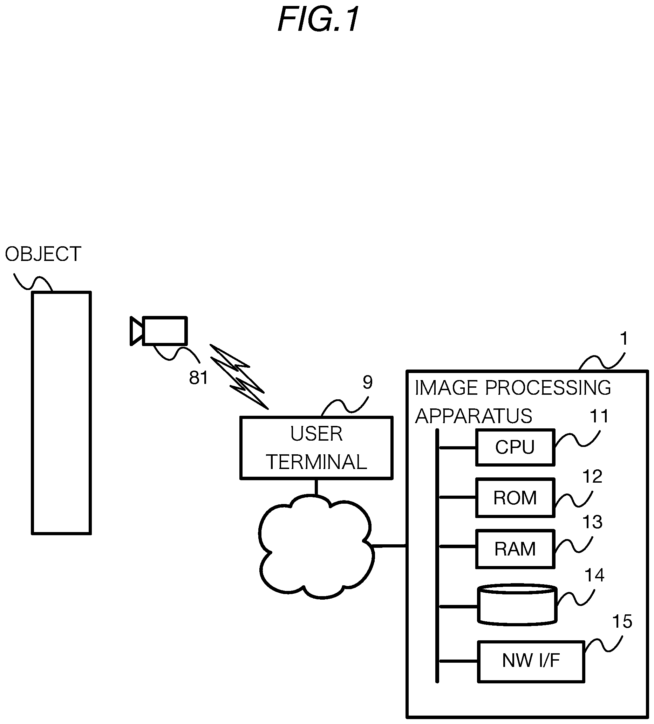

Fig. 1 is a schematic view illustrating a configuration of a system according to the present embodiment. The system according to the present embodiment includes an image processing apparatus 1, an image capturing apparatus 81, and a user terminal 9 which are connected to a network to be communicative with each other.

The image processing apparatus 1 is a computer including a CPU (Central Processing Unit) 11, a ROM (Read Only Memory) 12, a RAM (Random Access Memory) 13, a storage device 14 such as an EEPROM (Electrically Erasable and Programmable Read Only Memory) or a HDD (Hard Disk Drive), a communication unit 15 such as a NIC (Network Interface Card), and the like. However, with regard to a specific hardware configuration of the image processing apparatus 1, omissions, substitutions, and additions can be made as appropriate according to the mode of implementation. Additionally, the image processing apparatus 1 is not limited to an apparatus including a single housing. The image processing apparatus 1 may also be implemented by a plurality of apparatuses using a so-called cloud, distributed computing technology, or the like.

The image capturing apparatus 81 captures an image of an inspection target to obtain query images described later. For the image capturing apparatus 81, a typical digital camera or another apparatus capable of recording light incident thereon from the target needs only to be used, and a specific configuration thereof is not limited. In the present embodiment, the inspection target is a store in which an advertisement serving as a predetermined object is placed.

The user terminal 9 is a terminal apparatus to be used by a user. The user terminal 9 is a computer including a CPU, a ROM, a RAM, a storage device, a communication unit, an input device, an output device, and the like (the illustration thereof is omitted). However, with regard to a specific hardware configuration of the user terminal 9, omissions, substitutions, and additions can be made as appropriate according to the mode of implementation. Additionally, the user terminal 9 is not limited to an apparatus including a single housing. The user terminal 9 may also be implemented by a plurality of apparatuses using a so-called cloud, distributed computing technology, or the like. The user uses various services provided by the system according to the present embodiment via these user terminals 9.

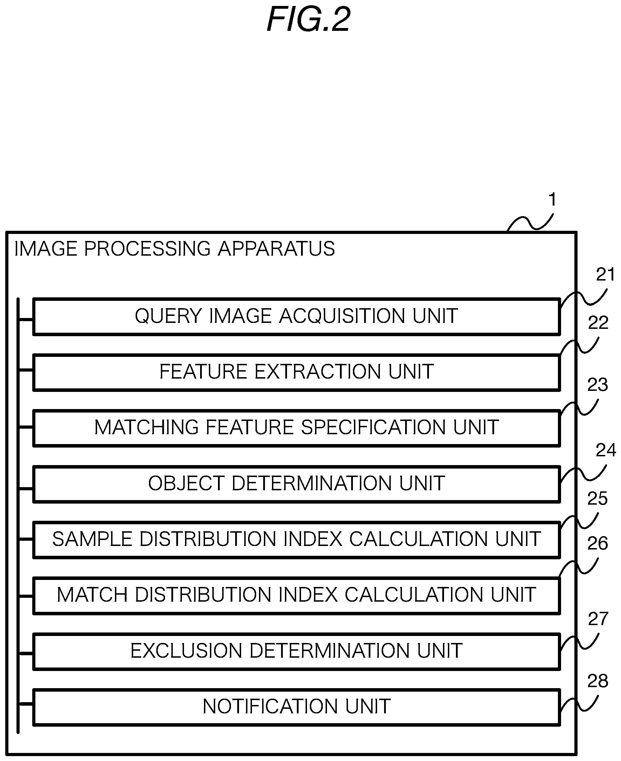

Fig. 2 is a diagram illustrating an overview of a functional configuration of the image processing apparatus 1 according to the present embodiment. In the image processing apparatus 1, a program recorded in the storage device 14 is read into the RAM 13 and executed by the CPU 11 to control each hardware item included in the image processing apparatus 1 and thereby allow the image processing apparatus 1 to function as an image processing apparatus including a query image acquisition unit 21, a feature extraction unit 22, a matching feature specification unit 23, an object determination unit 24, a sample distribution index calculation unit 25, a match distribution index calculation unit 26, an exclusion determination unit 27, and a notification unit 28. Note that, in the present embodiment and another embodiment described later, each of functions included in the image processing apparatus 1 is performed by the CPU 11, which is a versatile processor, but some or all of these functions may also be performed by one or a plurality of dedicated processors.

The query image acquisition unit 21 acquires the query images used as the inspection target resulting from simultaneous capturing of images of the placed object (which is the advertisement in the present embodiment) and a target of placement of the object (which is the store in the present embodiment). A method of acquiring the query image is not limited but, in the present embodiment, a description will be given of an example in which the query images captured by using the image capturing apparatus 81 are acquired via the user terminal 9.

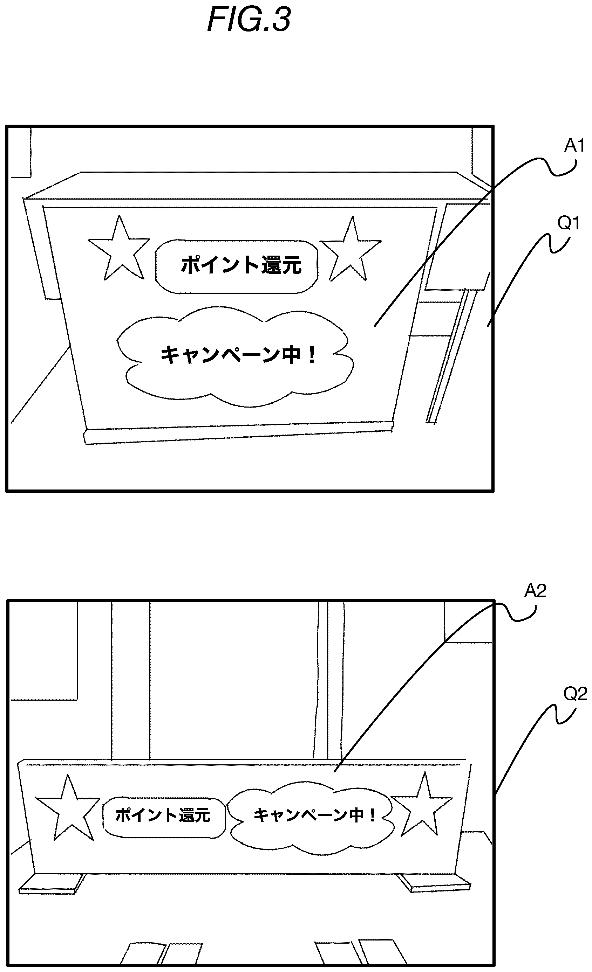

Fig. 3 is a diagram illustrating an example of the query images in the present embodiment. The present diagram illustrates a query image Q1 in which an advertisement A1 is image-captured together with the store and a query image Q2 in which an advertisement A2 is image-captured together with the store, with the advertisement A2 being an advertisement related to the same product or same service as that in the advertisement A1, but has a layout different from that in the advertisement A1.

As described above, in the present embodiment, a description will be given of the mode of implementation when the technology according to the present disclosure is implemented in order to confirm whether or not the advertisement serving as the predetermined object is placed correctly according to the instructions for posting advertisements. When a company posts an advertisement at a store or the like, even when the same product or service is to be advertised, for a plurality of types of advertisement prepared for an advertising purpose, posting rules therefor (such as posting positions or posting periods) may be determined in detail to obtain an intended effect. Depending on the size, layout, and content of each of the advertisements, instructions are given as to at which position the advertisement is be displayed, such as, e.g., on a signboard outside the store, at the store entrance, on a product shelf inside the store, or on a sideboard.

A person in charge of confirming whether or not the advertisement is placed correctly according to the instructions for posting advertisements takes a photograph at a location where the advertisement is posted (e.g., store) such that the advertisement and the target of the placement thereof are included in the same image, which is then used as the query image.

The feature extraction unit 22 extracts a plurality of features (feature points. Hereinbelow, the features extracted from the query image will be referred to as the "query features") from the query image Q1 or Q2 for which it is determined whether or not an image related to the predetermined object is included therein. Additionally, in the present embodiment, the feature extraction unit 22 further extracts, from a sample image S1 related to the predetermined object, a plurality of features (Hereinbelow, features extracted from the sample image are referred to as the "sample features"). Note that types of an algorithm and a descriptor which are used in the extraction of the features from the image are not limited and, besides the currently known algorithms and descriptors, any algorithm and descriptor which will be developed in future may also be used.

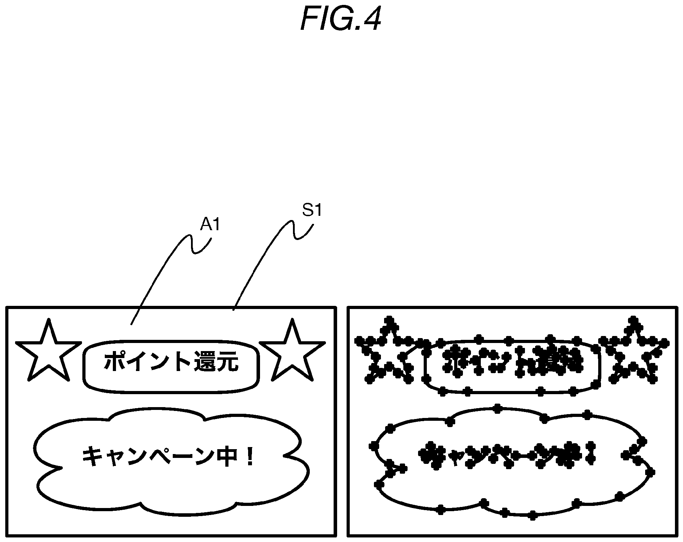

Fig. 4 is a diagram illustrating an example of the sample image S1 related to the object in the present embodiment and features extracted from the sample image S1. In the present diagram, the sample image S1 of the advertisement A1 described above is illustrated. Since the object according to the present embodiment is an advertisement to be posted at the store, as the sample image, data for producing the advertisement (e.g., data for printing) may be used, or photographic data obtained by capturing an image of the actually produced advertisement may also be used.

In the drawing, "+" indicates each of positions of the sample features extracted from the sample image S1. The extraction of the features from the query image Q1 or Q2 is substantially the same as the extraction of the features from the sample image except that an image to be input to an extractor is not the sample image, but the query image, and therefore the illustration thereof is omitted.

The matching feature specification unit 23 determines whether or not the plurality of individual sample features extracted from the sample image S1 match the plurality of query features extracted from the query image Q1 or Q2 to specify the plurality of sample features (hereinafter referred to as the "matching features") which are among the plurality of sample features and match any of the plurality of query features.

The object determination unit 24 determines, on the basis of the plurality of matching features, whether or not the query image Q1 or Q2 includes the image related to the predetermined object by using a method different from that to be used by the exclusion determination unit 27 described later. It is to be noted herein that a specific method for the object determination unit 24 to determine whether or not the query image Q1 or Q2 includes an image related to the predetermined object needs only to be a method different from that to be used by the exclusion determination unit 27 described later, and a specific determination method is not limited. Note that, in the present embodiment, the matching feature specification unit 23 and the object determination unit 24 use a trained machine learning model to specify the plurality of matching features and determine whether or not the query image Q1 or Q2 includes an image related to the predetermined object.

Specifically, for example, the matching feature specification unit 23 and the object determination unit 24 can determine whether or not the query image Q1 or Q2 includes the sample image S1 by using a method of comparing the features to each other by attempting optimization of a transformation of the features (which is a homography matrix in a case of a planar object and a basic matrix in a case of a three-dimensional object) between the sample image S1 and the query image Q1 or Q2 and determining that matching is established when the optimization is possible (in a case of an effective transformation or matrix). Note that a more specific matching method is the prior art technology shown in NPL 1 and NPL 2, and therefore a description thereof is omitted.

The sample distribution index calculation unit 25 calculates a sample distribution index indicating, in the sample image S1 related to the predetermined object, a dispersion of the plurality of sample features extracted from the sample image S1. In the present embodiment, when the sample image S1 is divided into a plurality of grids, the sample distribution index calculation unit 25 calculates respective densities of the sample features included in the individual grids and calculates a standard deviation of the densities included in the individual grids to calculate the sample distribution index. Note that, in the present embodiment, a description will be given of an example using a standard deviation as the distribution index but, as the distribution index, such a known statistic amount as to indicate a dispersion from a mean value, such as a variance, may be adopted appropriately.

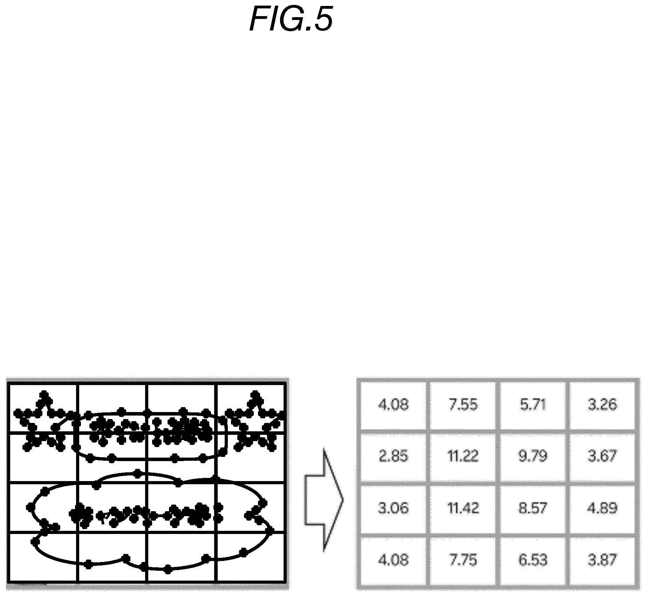

Fig. 5 is a diagram illustrating an outline of calculation of the density of the sample features in the present embodiment. In the present embodiment, the sample image S1 is equally divided into 16 grids arranged in the form of a matrix of 4 rows and 4 columns, and the density of the sample features in each of the grids is calculated. Specifically, the sample distribution index calculation unit 25 counts, for each of the grids, the number of the features included in the grid and calculates a ratio thereof to the number of the features included in the entire image to calculate the density of the features in each of the grids. In other words, in the present embodiment, a feature density $d_i$ of a grid i is calculated on the basis of the following numerical expression.

[Math. 1]
$$d_i = \frac{number\ of\ features\ in\ grid\ i}{total\ image\ features} \times 100$$

Then, the sample distribution index calculation unit 25 calculates a standard deviation of the feature density of the sample image S1 on the basis of the calculated feature density of each of the grids. In other words, in the present embodiment, a standard deviation sd of the feature density of the sample image S1 is calculated on the basis of the following numerical expression, where n is the number of grids (n = 16 is satisfied in the present embodiment) and $d_\mu$ is a mean density.

[Math. 2]
$$sd = \sqrt{\frac{1}{n_{grid}} \sum_{i=1}^{n_{grid}} (d_i - d_\mu)}$$

The match distribution index calculation unit 26 calculates the match distribution index indicating, in the sample image S1, a dispersion of the plurality of matching features which are among the plurality of sample features and match the plurality of query features extracted from the query image Q1 or Q2. In the present embodiment, when the sample image S1 is divided into the plurality of grids, the match distribution index calculation unit 26 calculates the density of the matching features included in each of the grids and calculates the standard deviation of the densities of the matching features included in the individual grids to calculate the match distribution index.

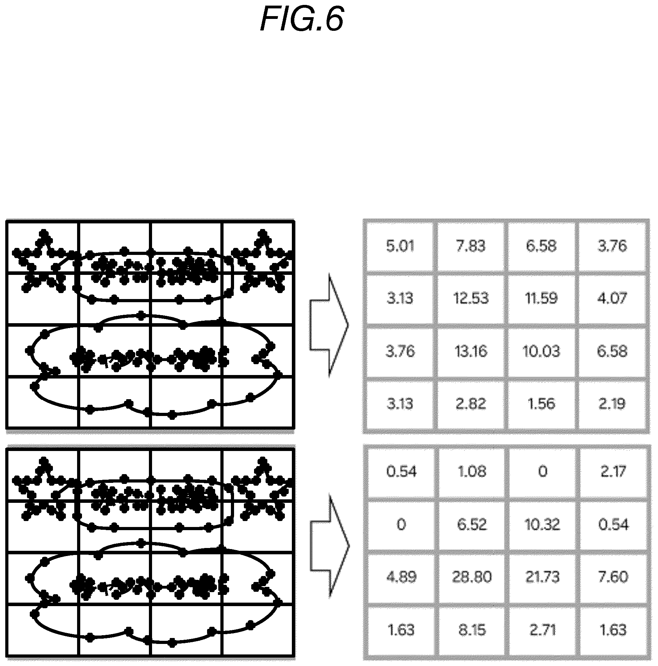

Fig. 6 is a diagram illustrating an outline of the calculation of the density of the matching features in the present embodiment. An example illustrated in an upper row indicates the density of the matching features which match the features of the query image Q1 illustrated by way of example in Fig. 3 in each of the grids, while an example illustrated in a lower row indicates the density of the matching features which match the features of the query image Q2 in each of the grids. For the match distribution index also, the sample image S1 is equally divided into 16 grids arranged in the form of a matrix of 4 rows and 4 columns, and the density of the matching features in each of the grids is calculated. A more specific method of calculating the match distribution index (standard deviation of the densities of the matching features) is the same as a method of calculating the sample distribution index described above, and therefore a description thereof is omitted.

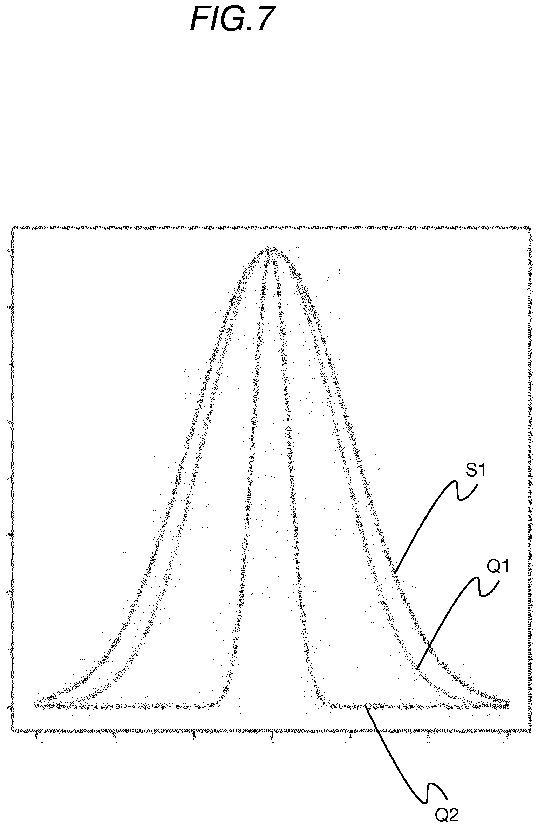

Fig. 7 is a diagram illustrating an outline of comparison between respective standard deviations of the feature densities in the sample image S1 and the query images Q1 and Q2. Note that the present diagram is a diagram for illustrating the outline of the comparison between the standard deviations, and accordingly numerical values for scales of a vertical axis and a horizontal axis are omitted. In the present diagram, the vertical axis represents the feature densities in the grids, while the horizontal axis represents deviations from a mean value when a center of the horizontal axis corresponds to the mean vale of the feature densities. From the present diagram, it can be understood that, compared to a difference between the standard deviation in the sample image S1 and the standard deviation in the query image Q1, a difference between the standard deviation in the sample image S1 and the standard deviation in the query image Q2 is relatively large.

The exclusion determination unit 27 determines that, when the difference between the sample distribution index and the match distribution index exceeds a predetermined standard, the query image Q1 or Q2 does not include an image (sample image S1) related to the predetermined object. When an absolute value of the difference between the standard deviation serving as the sample distribution index and the standard deviation serving as the match distribution index exceeds a predetermined threshold, the exclusion determination unit 27 determines that the query image Q1 or Q2 does not include an image related to the predetermined object irrespective of a result of the determination by the object determination unit 24. In other words, in the present embodiment, the exclusion determination unit 27 is a functional unit for determining whether the result of the determination by the object determination unit 24 is correct or incorrect.

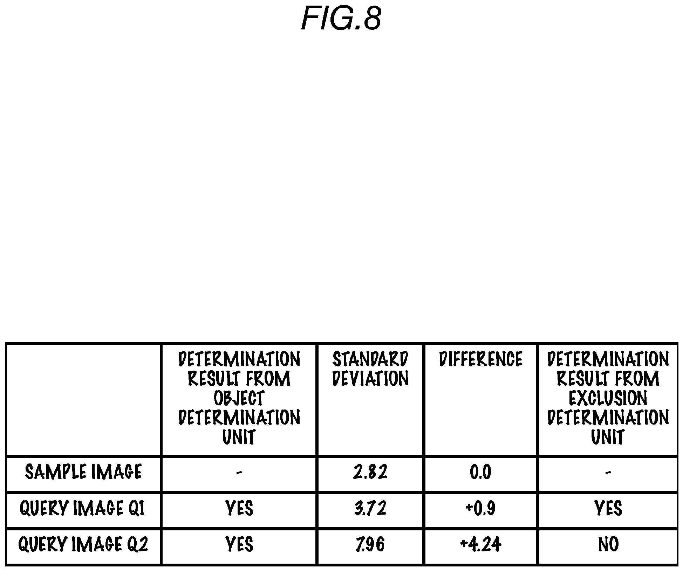

Fig. 8 is a diagram illustrating, for the sample image S1 and the query images Q1 and Q2, relationships between the results of the determination by the object determination unit 24, the standard deviations of the feature densities, and differences between the standard deviations. As will be understood by referring to Fig. 3 and Fig. 4, in the query image Q1, the advertisement A1 related to the sample image S1 is image-captured while, in the query image Q2, the advertisement A1 related to the sample image S1 is not image-captured. While the advertisement A2 image-captured in the query image Q2 is different from the advertisement A1 related to the sample image S1, only a layout thereof is different from that of the advertisement A1, and elements thereof have some in common with elements of the advertisement A1, and therefore the object determination unit 24 according to the present embodiment determines that, in each of the query image Q1 and the query image Q2, the advertisement A1 related to the sample image S1 is image-captured (i.e., the result of the determination of the query image Q2 by the object determination unit 24 is incorrect).

Accordingly, the exclusion determination unit 27 compares the distribution index (standard deviation) of the sample features calculated by the sample distribution index calculation unit 25 to the respective distribution indices (standard deviations) of the matching features related to the query image Q1 and the query image Q2, which are calculated by the match distribution index calculation unit 26. As a result, it can be understood that the difference between the sample distribution index and the match distribution index for the query image Q2 is relatively larger than the difference therebetween for the query image Q1. Since the difference for the query image Q2 exceeds the predetermined threshold, the exclusion determination unit 27 determines that, in the query image Q2, an advertisement related to the sample image S1 is not image-captured irrespective of the result of the determination by the object determination unit 24.

The notification unit 28 notifies the user of the result of the determination by the object determination unit 24 and/or the result of the determination by the exclusion determination unit 27.

<Processing Flow>

Next, a flow of processing to be performed by the image processing apparatus according to the present embodiment will be described. Note that a specific content of the processing described below and an order of the processing are examples for carrying out the present disclosure. The specific content of the processing and the order of the processing may be selected appropriately according to the mode of implementation of the present disclosure.

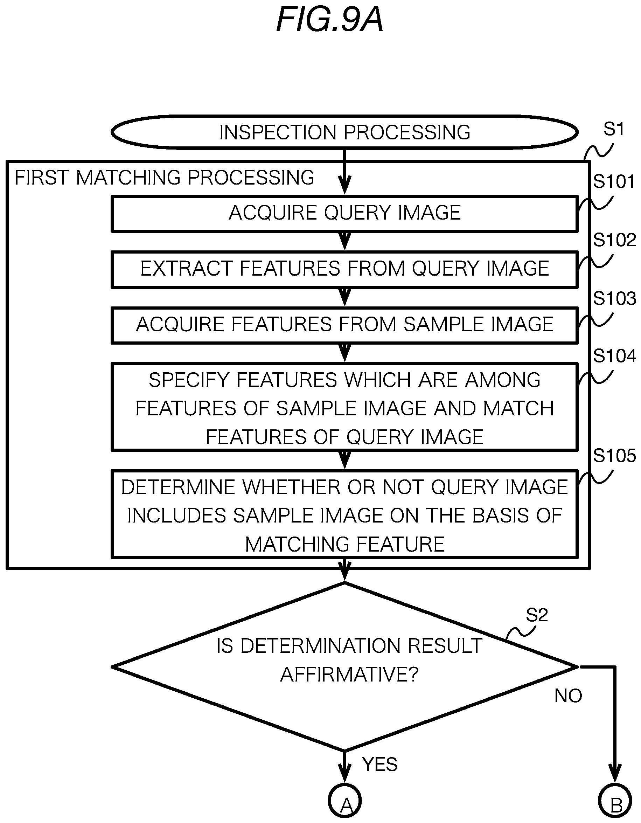

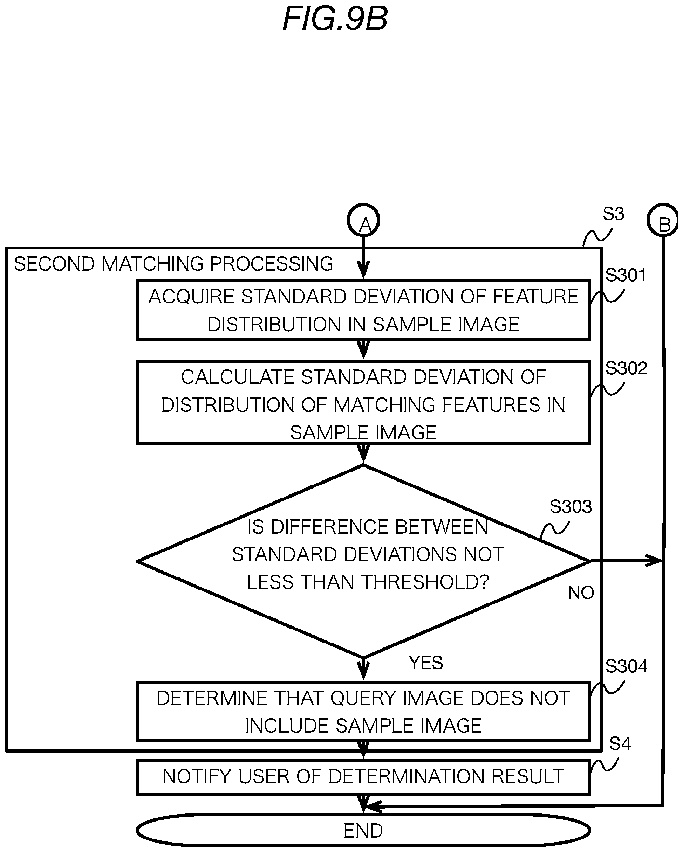

Fig. 9 is a flow chart illustrating a flow of the inspection processing according to the present embodiment. The processing illustrated in the present flow chart is performed by being triggered by reception of an instruction to start the inspection from the user.

In the inspection processing described in the present flow chart, first, first matching processing (Step S1) is performed in which first matching of groups of features of the query image and the predetermined sample image is performed on the basis of the trained model. Then, a result of the first matching performed by the first matching processing is determined (Step S2) and, when the result of the first matching indicates that the query image is similar to the sample image (YES in Step S2), second matching processing (Step S3) is performed in which second matching related to a distribution of the grope of the features of the query image is performed. When the results of the first matching processing and/or the second matching processing are obtained, the user is notified of a result of determination of a placement state (Step S4). The notification unit 28 notifies the user of the result of the determination in Step S1 and/or the result of the determination in Step S3. Subsequently, the processing illustrated in the present flow chart is ended.

The following will describe details of the processing (Step S101 to Step S105) included in the first matching processing (Step S1).

In Step S101, the query image is acquired. An operator captures an image of an inspection target (which is the store where the advertisement serving as the predetermined object is placed in the present embodiment) by using the image capturing apparatus 81, and inputs image data of the obtained query image to the image processing apparatus 1. An image capturing method and a method of inputting the image data to the image processing apparatus 1 are not limited but, in the present embodiment, an image of the inspection target is captured using the image capturing apparatus 81, and the image data transferred from the image capturing apparatus 81 to the user terminal 9 by communication or via a recording medium is further transferred to the image processing apparatus 1 via a network to allow the image data of the query image to be input to the image processing apparatus 1. When the query image is acquired by the query image acquisition unit 21, the processing advances to Step S102.

In Step S102 and Step S103, features related to the query image and features related to the sample image are acquired. The feature extraction unit 22 extracts the query features from the query image acquired in Step S101 (Step S102). Then, the matching feature specification unit 23 acquires the sample features extracted from the sample image (Step S103). Note that the sample features acquired in Step S103 may also be those extracted and stored in advance by the feature extraction unit 22 or the like before the processing according to the present flow chart is started or may also be those extracted by the feature extraction unit 22 at the time of the processing according to the present flow chart. Subsequently, the processing advances to Step S104.

In Step S104 and Step S105, it is determined whether or not the query image includes the sample image. The matching feature specification unit 23 determines whether or not each of the sample features acquired in Step S103 matches the query features extracted in Step S102 to specify the matching features which are among the sample features and match any of the query features (Step S104). Then, the object determination unit 24 determines, on the basis of a result of the matching in Step S104, whether or not the query image includes an image related to the predetermined object (Step S105). As described above, in the present embodiment, the method of determining whether or not the sample image and the query image match by using the method of determining whether or not the transformation of the features can be optimized between the sample image and the query image is adopted, but the matching method to be adopted in the first matching processing needs only to be different from that adopted in the second matching processing described later, and the matching method adopted in the first matching processing is not limited to the example shown in the present disclosure. Subsequently, the first matching processing is ended.

The following will describe details of processing (Step S301 to Step S304) included in the second matching processing (Step S3).

In Step S301 and Step S302, the standard deviation of the sample features included in the plurality of grids into which the sample image is divided and the standard deviation of the matching features are acquired. The exclusion determination unit 27 acquires the standard deviation of the densities of the sample features included in the individual grids when the sample image is divided into the plurality of grids (the 16 grids arranged in the form of the matrix of 4 rows and 4 columns in the present embodiment) (Step S301). Note that the standard deviation of the sample features acquired in Step S301 may be that calculated and stored in advance by the sample distribution index calculation unit 25 or the like before the processing according to the present flow chart is started or may also be calculated by the sample distribution index calculation unit 25 at the time of the processing according to the present flow chart. Meanwhile, when the sample image is divided into the plurality of grids (the 16 grids arranged in the form of the matrix of 4 rows and 4 columns in the present embodiment), the match distribution index calculation unit 26 calculates the density of the matching features included in each of the grids, and calculates the standard deviation of the densities of the matching features included in the individual grids (Step S302). Subsequently, the processing advances to Step S303.

In Step S303 and Step S304, it is verified on the basis of the standard deviations whether or not the query image includes the sample image. The exclusion determination unit 27 calculates the difference between the standard deviation of the sample features and the standard deviation of the matching features, and compares the calculated difference to a preset threshold (Step S303). As a result of the comparison, when the calculated difference exceeds the threshold, the exclusion determination unit 27 determines that, in the query image acquired in Step S101, the object related to the sample image is not image-captured (Step S304). Subsequently, the second matching processing is ended.

In other words, according to the processing illustrated in the present flow chart, when a result of the first matching processing is affirmative (indicates that the query image is similar to the sample image), the second matching processing is performed and, on the basis of a distribution of the features, the result of the determination in the first matching processing is verified.

<Effects>

By including the configurations described above, the image processing apparatus, the image processing method, and the image processing program according to the present embodiment can improve accuracy of image processing for determining whether or not a target image includes an image related to a predetermined object.

<Variation>

In the embodiment described above, to correct the result of the determination by the first matching processing, the second matching processing considering the positional relationships and distribution status among the features according to the present disclosure is performed. However, the matching processing considering the positional relationships and distribution status among the features according to the present disclosure is not limited to the use of correcting a result of determination by another matching processing. Note that, in the present variation, a description of configurations common to those in the embodiment described above is omitted, and a description will be given of differences.

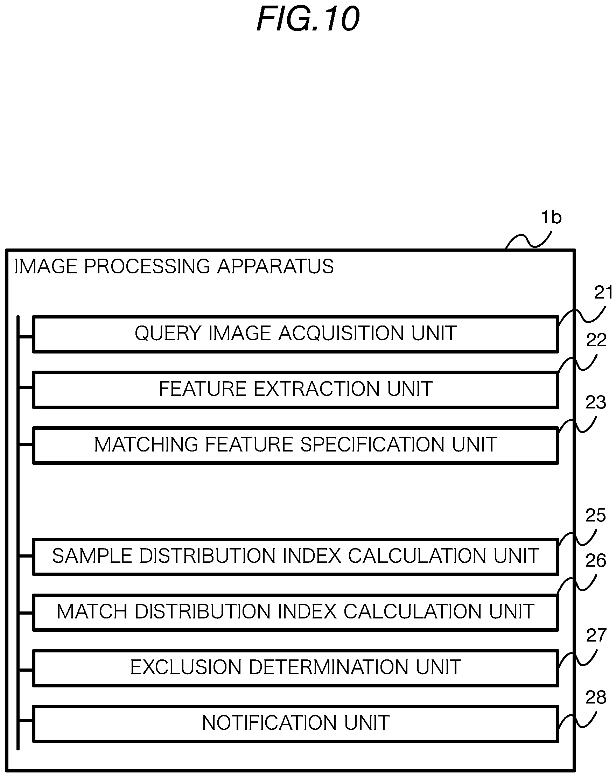

Fig. 10 is a diagram illustrating an outline of a functional configuration of an image processing apparatus 1b according to the variation. In the image processing apparatus 1b, a program recorded in the storage device 14 is read into the RAM 13 and executed by the CPU 11 to control each hardware item included in the image processing apparatus 1b and thereby allow the image processing apparatus 1b to function as an image processing apparatus including the query image acquisition unit 21, the feature extraction unit 22, the matching feature specification unit 23, the sample distribution index calculation unit 25, the match distribution index calculation unit 26, the exclusion determination unit 27, and the notification unit 28. In other words, the image processing apparatus 1b according to the present embodiment is obtained by omitting the object determination unit 24 from the image processing apparatus 1 illustrated in Fig. 2.

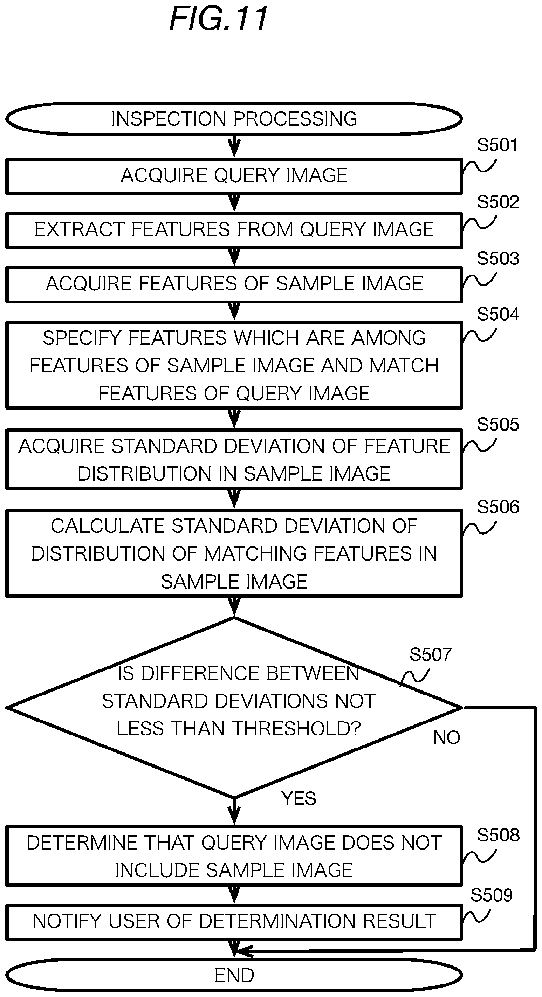

Fig. 11 is a flow chart illustrating a flow of inspection processing according to the variation. The processing illustrated in the present flow chart is performed by being triggered by reception of an instruction to start the inspection from the user, similarly to the inspection processing described with reference to Fig. 9.

The processing shown in Step S501 to Step S504 is substantially the same as the processing in Step S101 to Step S104 of the inspection processing described with reference to Fig. 9, and the processing shown in Step S505 to Step S509 is substantially the same as the processing in Step S301 to Step S304 of the inspection processing described with reference to Fig. 9 and in Step S4. In other words, the inspection processing illustrated in the present flow chart is obtained by omitting Step S105 and Step S2 from the inspection processing described with reference to Fig. 9.

<Other Variations>

In the embodiment described above, the example has been described in which the sample image is equally divided into the 16 grids arranged in the form of the matrix of 4 rows and 4 columns, and the density of the sample features in each of the grids is calculated. However, the method of the division into the grids is not limited to the example shown in the present embodiment. For example, a method of equally dividing the sample image into 9 grids arranged in the form of a matrix of 3 rows and 3 columns may be adopted appropriately, or another division method may also be adopted appropriately.

[Reference Signs List]

1  Image processing apparatus

**Claims**

1. An image processing apparatus comprising:

   a sample distribution index calculation means that calculates a sample distribution index indicating a dispersion of a plurality of sample features in a sample image related to a predetermined object, the plurality of sample features being extracted from the sample image;
   a match distribution index calculation means that calculates a match distribution index indicating a dispersion of a plurality of matching features in the sample image, the plurality of matching features, among the plurality of sample features, matching a plurality of query features extracted from a query image for which determination is made as to whether or not an image related to the predetermined object is included therein; and
   an exclusion determination means that determines that, when a difference between the sample distribution index and the match distribution index exceeds a predetermined standard, the query image does not include the image related to the predetermined object.

2. The image processing apparatus according to claim 1, wherein

   the sample distribution index calculation means calculates, as the sample distribution index, a standard deviation of the plurality of sample features in the sample image, and
the match distribution index calculation means calculates, as the match distribution index, a standard deviation of the plurality of matching features in the sample image.

3. The image processing apparatus according to claim 2, wherein

the sample distribution calculation means calculates, when the sample image is divided into a plurality of grids, a density of the sample features included in each of the grids and calculates a standard deviation of the respective densities of the sample features included in the individual grids to calculate the sample distribution index, and
the match distribution index calculation means calculates, when the sample image is divided into the plurality of grids, a density of the matching features included in each of the grids and calculates a standard deviation of the densities of the matching features included in the individual grids to calculate the match distribution index.

4. The image processing apparatus according to claim 3, wherein the exclusion determination means determines that the query image does not include the image related to the predetermined object when a difference between the standard deviation serving as the sample distribution index and the standard deviation serving as the match distribution index exceeds a predetermined threshold.

5. The image processing apparatus according to claim 1, further comprising:

an object determination means that determines, on the basis of the plurality of matching features, whether or not the query image includes the image related to the predetermined object by using a method different from that used by the exclusion determination means, wherein
the exclusion determination means determines that, when a difference between the sample distribution index and the match distribution index exceeds a predetermined standard, the query image does not include the image related to the predetermined object irrespective of a result of the determination by the object determination means.

6. The image processing apparatus according to claim 5, wherein the object determination means uses a trained machine learning model to determine, on the basis of the plurality of matching features, whether or not the query image includes the image related to the predetermined object.

7. The image processing apparatus according to claim 1, further comprising:
a matching feature specification means that determines whether or not the plurality of sample features respectively match the plurality of query features to specify the plurality of matching features which, among the plurality of sample features, match any of the plurality of query features.

8. The image processing apparatus according to claim 1, further comprising:
a feature extraction means that extracts the plurality of query features from the query image.

9. The image processing apparatus according to claim 8, wherein the feature extraction means further extracts the plurality of sample features from the sample image.

10. An image processing method of causing a computer to perform:

a sample distribution index calculation step of calculating a sample distribution index indicating a dispersion of a plurality of sample features in a sample image related to a predetermined object, the plurality of sample features being extracted from the sample image;
a match distribution index calculation step of calculating a match distribution index indicating a dispersion of a plurality of matching features in the sample image, the plurality of matching features, among the plurality of sample features, matching a plurality of query features extracted from a query image for which determination is made as to whether or not an image related to the predetermined object is included therein; and
an exclusion determination step of determining that, when a difference between the sample distribution index and the match distribution index exceeds a predetermined standard, the query image does not include the image related to the predetermined object.

11. An image processing program for causing a computer to function as:

a sample distribution index calculation means that calculates a sample distribution index indicating a dispersion of a plurality of sample features in a sample image related to a predetermined object, the plurality of sample features being extracted from the sample image;
a match distribution index calculation means that calculates a match distribution index indicating a dispersion of a plurality of matching features in the sample image, the plurality of matching features, among the plurality of sample features, matching a plurality of query features extracted from a query image for which determination is made as to whether or not an image related to the predetermined object is included therein; and

an exclusion determination means that determines that, when a difference between the sample distribution index and the match distribution index exceeds a predetermined standard, the query image does not include the image related to the predetermined object.

# FIG.1

OBJECT

81

9

USER TERMINAL

1

IMAGE PROCESSING APPARATUS

11

CPU

12

ROM

13

RAM

14

15

NW I/F

# FIG.2

IMAGE PROCESSING APPARATUS

QUERY IMAGE ACQUISITION UNIT

FEATURE EXTRACTION UNIT

MATCHING FEATURE SPECIFICATION UNIT

OBJECT DETERMINATION UNIT

SAMPLE DISTRIBUTION INDEX CALCULATION UNIT

MATCH DISTRIBUTION INDEX CALCULATION UNIT

EXCLUSION DETERMINATION UNIT

NOTIFICATION UNIT

# FIG.3

# FIG.4

# FIG.5

# FIG.6

# FIG.7

# FIG.8

| | DETERMINATION RESULT FROM OBJECT DETERMINATION UNIT | STANDARD DEVIATION | DIFFERENCE | DETERMINATION RESULT FROM EXCLUSION DETERMINATION UNIT |
|---|---|---|---|---|
| SAMPLE IMAGE | - | 2.82 | 0.0 | - |
| QUERY IMAGE Q1 | YES | 3.72 | +0.9 | YES |
| QUERY IMAGE Q2 | YES | 7.96 | +4.24 | NO |

## FIG.9A

```
        ( INSPECTION PROCESSING )                S1

  FIRST MATCHING PROCESSING
                                                  S101
  ┌──────────────────────────────────────┐
  │        ACQUIRE QUERY IMAGE            │
  └──────────────────────────────────────┘
                                                  S102
  ┌──────────────────────────────────────┐
  │  EXTRACT FEATURES FROM QUERY IMAGE    │
  └──────────────────────────────────────┘
                                                  S103
  ┌──────────────────────────────────────┐
  │  ACQUIRE FEATURES FROM SAMPLE IMAGE   │
  └──────────────────────────────────────┘
                                                  S104
  ┌──────────────────────────────────────┐
  │  SPECIFY FEATURES WHICH ARE AMONG     │
  │  FEATURES OF SAMPLE IMAGE AND MATCH   │
  │  FEATURES OF QUERY IMAGE              │
  └──────────────────────────────────────┘
                                                  S105
  ┌──────────────────────────────────────┐
  │ DETERMINE WHETHER OR NOT QUERY IMAGE  │
  │ INCLUDES SAMPLE IMAGE ON THE BASIS OF │
  │ MATCHING FEATURE                      │
  └──────────────────────────────────────┘


            IS DETERMINATION RESULT            S2
                 AFFIRMATIVE?
                                          NO

         YES                             
          (A)                            (B)
```

# FIG.9B

# FIG.10

1b

IMAGE PROCESSING APPARATUS

| 21 | QUERY IMAGE ACQUISITION UNIT |

| 22 | FEATURE EXTRACTION UNIT |

| 23 | MATCHING FEATURE SPECIFICATION UNIT |

| 25 | SAMPLE DISTRIBUTION INDEX CALCULATION UNIT |

| 26 | MATCH DISTRIBUTION INDEX CALCULATION UNIT |

| 27 | EXCLUSION DETERMINATION UNIT |

| 28 | NOTIFICATION UNIT |

# FIG.11

INSPECTION PROCESSING

ACQUIRE QUERY IMAGE — S501

EXTRACT FEATURES FROM QUERY IMAGE — S502

ACQUIRE FEATURES OF SAMPLE IMAGE — S503

SPECIFY FEATURES WHICH ARE AMONG FEATURES OF SAMPLE IMAGE AND MATCH FEATURES OF QUERY IMAGE — S504

ACQUIRE STANDARD DEVIATION OF FEATURE DISTRIBUTION IN SAMPLE IMAGE — S505

CALCULATE STANDARD DEVIATION OF DISTRIBUTION OF MATCHING FEATURES IN SAMPLE IMAGE — S506

IS DIFFERENCE BETWEEN STANDARD DEVIATIONS NOT LESS THAN THRESHOLD? — S507

NO

YES

DETERMINE THAT QUERY IMAGE DOES NOT INCLUDE SAMPLE IMAGE — S508

NOTIFY USER OF DETERMINATION RESULT — S509

END

| INTERNATIONAL SEARCH REPORT | International application No. |
| --- | --- |
| | **PCT/JP2023/027608** |

**A. CLASSIFICATION OF SUBJECT MATTER**

*G06T 7/00*(2017.01)i
FI: G06T7/00 300F

According to International Patent Classification (IPC) or to both national classification and IPC

**B. FIELDS SEARCHED**

Minimum documentation searched (classification system followed by classification symbols)

G06T7/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2012-190089 A (KDDI CORPORATION) 04 October 2012 (2012-10-04) paragraphs [0031], [0035]-[0050] | 1-11 |
| A | US 2010/0092093 A1 (OLYMPUS CORPORATION) 15 April 2010 (2010-04-15) paragraphs [0078], [0092]-[0104], [0134], [0174]-[0190], [0205] | 1-11 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **08 September 2023** | **26 September 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**
Information on patent family members

International application No.

**PCT/JP2023/027608**

| Patent document cited in search report | | | Publication date (day/month/year) | Patent family member(s) | | | Publication date (day/month/year) |
|---|---|---|---|---|---|---|---|
| JP | 2012-190089 | A | 04 October 2012 | (Family: none) | | | |
| US | 2010/0092093 | A1 | 15 April 2010 | JP | 2010-518507 | A | |
| | | | | paragraphs [0010], [0026]-[0039], [0070], [0107]-[0122], [0136] | | | |
| | | | | WO | 2008/100248 | A2 | |
| | | | | CN | 101627399 | A | |

Form PCT/ISA/210 (patent family annex) (January 2015)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2021051581 A

**Non-patent literature cited in the description**

• Open CV Feature Matching. *Open CV*, 27 February 2023, https://docs.opencv.org/4.x/dc/dc3/tutorial_-py_matcher.html

• **PAUL-EDOUARD SARLIN**. Super Glue: Learning Feature Matching with Graph Neural Networks. *CVPR*, 2020